(19) Europäisches Patentamt
European Patent Office
Office européen des brevets

(11) **EP 3 851 692 B1**

(12) **EUROPEAN PATENT SPECIFICATION**

(45) Date of publication and mention
of the grant of the patent:
**06.09.2023   Bulletin 2023/36**

(21) Application number: **19860198.1**

(22) Date of filing: **09.09.2019**

(51) International Patent Classification (IPC):
*F16C 37/00* (2006.01)   *F16C 19/18* (2006.01)
*F16C 33/66* (2006.01)   *F16N 7/32* (2006.01)
*F16C 35/077* (2006.01)   *H02K 5/173* (2006.01)
*H02K 7/14* (2006.01)

(52) Cooperative Patent Classification (CPC):
**F16C 37/007; F16C 33/6659; F16C 33/6662;
F16C 33/6681; F16C 33/6685; F16C 35/077;
F16N 7/32; H02K 5/173; H02K 7/14;** F16C 19/184;
F16C 2322/39; F16N 2210/14

(86) International application number:
**PCT/JP2019/035365**

(87) International publication number:
**WO 2020/054661 (19.03.2020 Gazette 2020/12)**

(54) **BEARING DEVICE COOLING STRUCTURE, AND MAIN SPINDLE DEVICE OF MACHINE TOOL**

KÜHLSTRUKTUR EINER LAGERVORRICHTUNG UND HAUPTSPINDELVORRICHTUNG EINER WERKZEUGMASCHINE

STRUCTURE DE REFROIDISSEMENT DE DISPOSITIF DE ROULEMENT, ET DISPOSITIF DE BROCHE DE MACHINE-OUTIL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.09.2018   JP 2018171129
07.02.2019   JP 2019020645**

(43) Date of publication of application:
**21.07.2021   Bulletin 2021/29**

(73) Proprietor: **NTN Corporation
Osaka-shi, Osaka 550-0003 (JP)**

(72) Inventors:
• **NASU, Keisuke
Kuwana-shi, Mie 511-8678 (JP)**
• **FUKADA, Kikuo
Kuwana-shi, Mie 511-8678 (JP)**
• **OBATA, Tomohiko
Kuwana-shi, Mie 511-0867 (JP)**

(74) Representative: **Maikowski & Ninnemann
Patentanwälte Partnerschaft mbB
Postfach 15 09 20
10671 Berlin (DE)**

(56) References cited:
WO-A2-01/63132        JP-A- 2000 192 971
JP-A- 2006 125 487     JP-A- 2014 062 619
JP-A- 2014 062 620     JP-A- 2015 117 820
JP-A- 2015 117 820

**Description**

CROSS REFERENCE TO THE RELATED APPLICATION

This application is based on and claims Convention priority to Japanese patent application No. 2018-171129, filed September 13, 2018 and Japanese patent application No. 2019-020645, filed February 7, 2019.

BACKGROUND OF THE INVENTION

(Field of the Invention)

The present invention relates to a cooling structure of a bearing device such as, for example, a cooling structure for cooling a spindle of a machine tool and a bearing incorporated into the spindle.

(Description of Related Art)

In spindle devices of machine tools, it is necessary to suppress a temperature rise in the apparatuses to ensure processing accuracy. However, recent machine tools tend to be operated at higher speed in order to improve processing efficiency. Thus, as the operation speed increases, a greater amount of heat is generated from bearings for supporting spindles. In addition, use of spindle devices of a so-called motor built-in type including driving motors incorporated therein has become increasingly common, and such constitution tends to contribute to heat generation in the apparatuses. Since a temperature rise in the bearings due to heat generation causes an increase in preload to the bearings, it is desirable to suppress it as much as possible in order to achieve higher operation speed of the spindles and higher precision of processing.

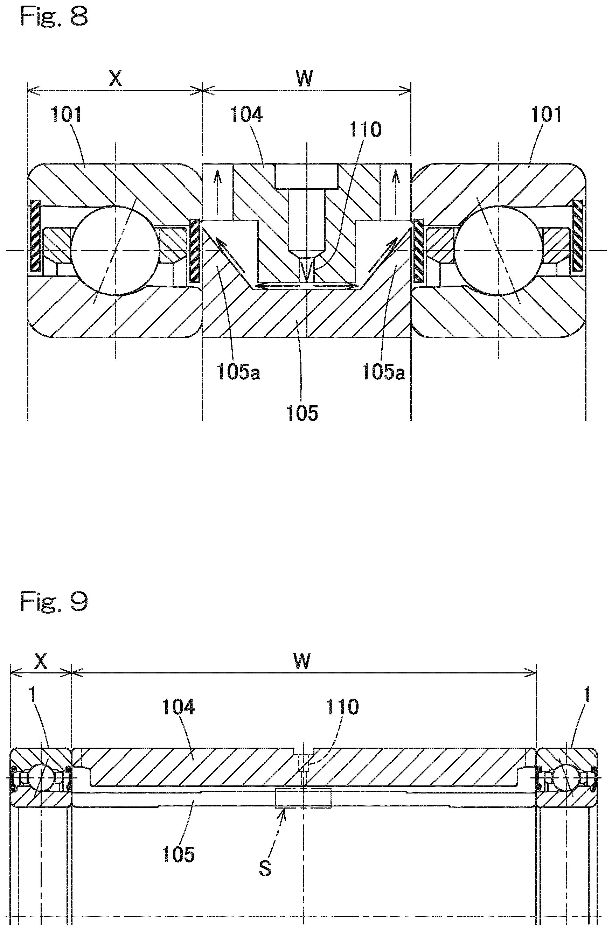

As a way of suppressing a temperature rise in a spindle device, Patent Document 1 has proposed a method for cooling a bearing 101 during operation by discharging compressed air from a nozzle 110 disposed at an axial center of an outer ring spacer 104 toward an inner ring spacer 105, as shown in Fig. 9.

Patent Document 2 regards a bearing which receives minute quantities of grease or oil from an electrically controlled injector having a nozzle that is directed at the rolling elements of the bearing.

Patent Document 3 regards a cooling structure of a bearing device.

[Related Document]

[Patent Document]

[Patent Document 1] JP Patent No. 6144024

[Patent Document 2] WO 01/63132 A2
[Patent Document 3] JP 2015 117 820 A

SUMMARY OF THE INVENTION

In the case of the constitution of Patent Document 1, since a spacer width W is equivalent to a bearing width X, a sufficient cooling effect can be obtained because of a short distance between a discharge port and the bearing, even where the nozzle 110 for discharging the compressed air is disposed at the axial center of the outer ring spacer 104.

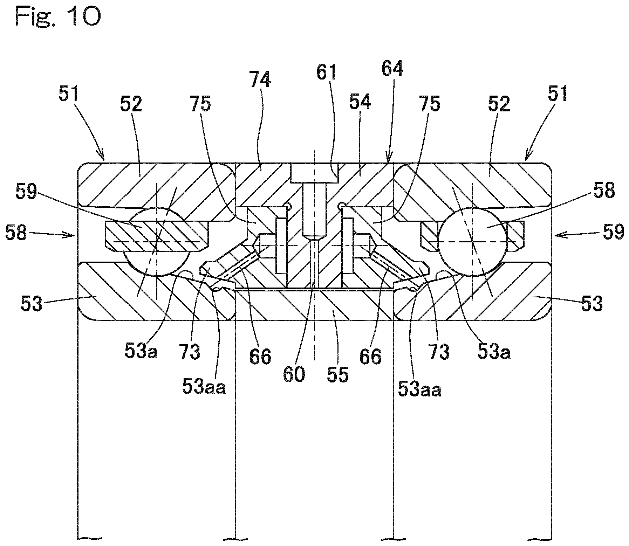

However, in a case where the spacer width W is large (for example, as shown in Fig. 10, the spacer width W is equal to or larger than 2.5 times of the bearing width X), the cooling effect is deteriorated because of a longer distance between the bearing 1 and a position S where active cooling is performed, even where the nozzle 110 for discharging the compressed air is disposed at the axial center of the outer ring spacer 104 to cool the inner ring spacer 105 by the compressed air.

An object of the present invention is to provide a cooling structure of an air-cooled bearing device and a spindle device of a machine tool, which are capable of securely providing the effect of cooling a bearing even where a spacer has a large width dimension.

The present invention provides a cooling structure of a bearing device including:

> a bearing;
> an outer ring spacer adjacent to an outer ring of the bearing; and
> an inner ring spacer adjacent to an inner ring of the bearing, wherein
> the outer ring spacer is provided with a nozzle configured to discharge compressed air toward an outer peripheral surface of the inner ring spacer,
> the nozzle is inclined frontward in a rotation direction of the inner ring spacer and is located at a position that is offset from an arbitrary line extending in a radial direction in a cross-section perpendicular to an axis of the outer ring spacer, in a direction perpendicular to the line,
> each of the outer ring spacer and the inner ring spacer has a width equal to or larger than 2.5 times of a bearing width, and
> a distance from a center of the nozzle to a side surface of the bearing is equal to or smaller than the bearing width and equal to or larger than half of the bearing width.

According to this constitution, the compressed air for cooling is blown from the nozzle onto the outer peripheral surface of the inner ring spacer because the nozzle is inclined frontward in the rotation direction. Thus, the compressed air forms a swirling flow in an annular gap part between the outer peripheral surface of the inner ring spacer and an inner peripheral surface of the outer ring spacer to cool the inner ring spacer. As a result, the bearing inner ring, which is in contact with and fixed to an end face of the inner ring spacer, is cooled by heat conduction.

Where the nozzle is disposed distant from the bearing, the cooling effect is deteriorated as discussed in connection with the object of the present invention. In contrast, where the nozzle is disposed near the bearing, the compressed air would not swirl in the rotation direction of the inner ring and be quickly diffused in an axial direction. For this reason, the compressed air cannot stay on the surface of the inner ring spacer for long, so that the cooling effect is deteriorated. In the case of grease lubrication, there is a problem that grease filled inside the bearing is discharged to an outside of the bearing, resulting in deterioration of lubrication reliability. For this reason, as shown in Fig. 8, an obstruction wall 105a is provided on an end face of the inner ring spacer to reduce the amount of the compressed air flowing into the bearing. Further, a distance Y from the center of the nozzle to the side surface of the bearing is equal to or smaller than the bearing width X and equal to or larger than half of the bearing width X. It was confirmed that as long as the distance falls within this range, the effect of cooling the bearing can be ensured even where the spacer has a large width dimension because a distance between the bearing and a position where the inner ring spacer is cooled by the compressed air discharged from the nozzle is not too large and because the compressed air is not diffused without swirling as it is in the case where the nozzle is located too close. Where a spacer width is small, the above problem that the cooling effect is deteriorated because the nozzle is located too distant does not arise. Where a spacer width is large (e.g., equal to or larger than 2.5 times of the bearing width), the restriction of the distance Y from the center of the nozzle to the bearing side surface provides the above effect.

In the cooling structure of the bearing device of the present invention, the outer ring spacer may be provided with an exhaust path configured to exhaust air from a space between the outer ring spacer and the inner ring spacer to an outside on each of a bearing side of the outer ring spacer and a side opposite to the bearing side with respect to the nozzle.

Where the nozzle configured to discharge the compressed air is disposed near the bearing, the compressed air flowing toward the bearing side is discharged through the exhaust path between the outer ring spacer and the bearing and through an inside of the bearing. On the other hand, the compressed air flowing toward the side opposite to the bearing side, if there is no opening for air exhaustion, tends to be retained in the space between the inner ring spacer and the outer ring spacer after taking heat from the inner ring spacer, resulting in deterioration of the cooling effect. Therefore, it is necessary to also provide an exhaust path on the side opposite to the bearing side.

Where the respective exhaust paths are provided, the exhaust path on the side opposite to the bearing side may be inclined such that an exhaust opening is directed frontward in the rotation direction of the inner ring spacer. Although the exhaust path may be provided so as to extend in the radial direction, exhaust performance is improved where the exhaust path is inclined frontward in the rotation direction of the inner ring spacer.

Where the respective exhaust paths are provided, a difference between a volume of the exhaust path on the bearing side and a volume of the exhaust path on the side opposite to the bearing side may preferably fall within 10% of the volume of the exhaust path on the bearing side. The exhaust path on the side opposite to the bearing side may have a volume equivalent to that of the exhaust groove on the bearing side so as to prevent the compressed air from unevenly flowing toward one of the bearing side and the side opposite to the bearing side.

In the cooling structure of the bearing device of the present invention, the outer ring spacer and the inner ring spacer may be interposed between two adjacent bearings, and nozzles may be disposed on opposite sides of the outer ring spacer with respect to a center position of a spacer width of the outer ring spacer. Where the outer ring spacer and the inner ring spacer are disposed between the bearings, and the nozzles are provided for the bearings on opposite sides, the cooling effect can be more effectively secured by restricting the distance between the nozzles and the bearings and the spacer width.

A spindle device of a machine tool of the present invention may include any of the above-described cooling structures of the bearing devices of the present invention. Since it is necessary to suppress a temperature rise in a spindle device of a machine tool in order to ensure processing accuracy of the spindle device, the effect of applying the cooling structure of the bearing device of the present invention can be effectively attained.

Any combination of at least two constructions, disclosed in the appended claims and/or the specification and/or the accompanying drawings should be construed as included within the scope of the present invention. In particular, any combination of two or more of the appended claims should be equally construed as included within the scope of the present invention.

BRIEF DESCRIPTION OF THE DRAWINGS

The present invention will be more clearly understood from the following description of preferred embodiments thereof, when taken in conjunction with the accompanying drawings. However, the embodiments and the drawings are given only for the purpose of illustration and explanation, and are not to be taken as limiting the scope of the present invention in any way whatsoever, which scope is to be determined by the appended claims. In the accompanying drawings, like reference numerals are used to denote like parts throughout the several views. In the figures,

Fig. 1 is a sectional view of a cooling structure of a bearing device according to a first embodiment of the present invention;

Fig. 2 illustrates a dimensional relation between a bearing and a spacer;

Fig. 3 is a horizontal section view of an outer ring spacer and an inner ring spacer of the cooling structure of the bearing device along a plane at a nozzle position;

Fig. 4 is a sectional view of a cooling structure of a bearing device according to another embodiment of the present invention;

Fig. 5 is a horizontal section view of the outer ring spacer showing an example of an exhaust path on a side opposite to a bearing side in the cooling structure of the bearing device;

Fig. 6 is a horizontal section view of the outer ring spacer showing another example of the exhaust path on the side opposite to the bearing side in the cooling structure of the bearing device;

Fig. 7 is a sectional view of a spindle device of a machine tool including the cooling structure of the bearing device;

Fig. 8 is a sectional view of a conventional example;

Fig. 9 is a sectional view of a cooling structure of a bearing device according to a proposed example;

Fig. 10 is a partial longitudinal section view of a part of a cooling structure of a bearing device according to a first construction example of application aspects;

Fig. 11 is a horizontal section view of a spacer part of the bearing device;

Fig. 12 is a longitudinal section view of a spindle device of a machine tool including the bearing device;

Fig. 13 is a partial longitudinal section view of a part of a cooling structure of a bearing device according to another construction example of the application aspects; and

Fig. 14 is a partial longitudinal section view of a part of a cooling structure of a bearing device according to yet another construction example of the application aspects.

DESCRIPTION OF THE EMBODIMENTS

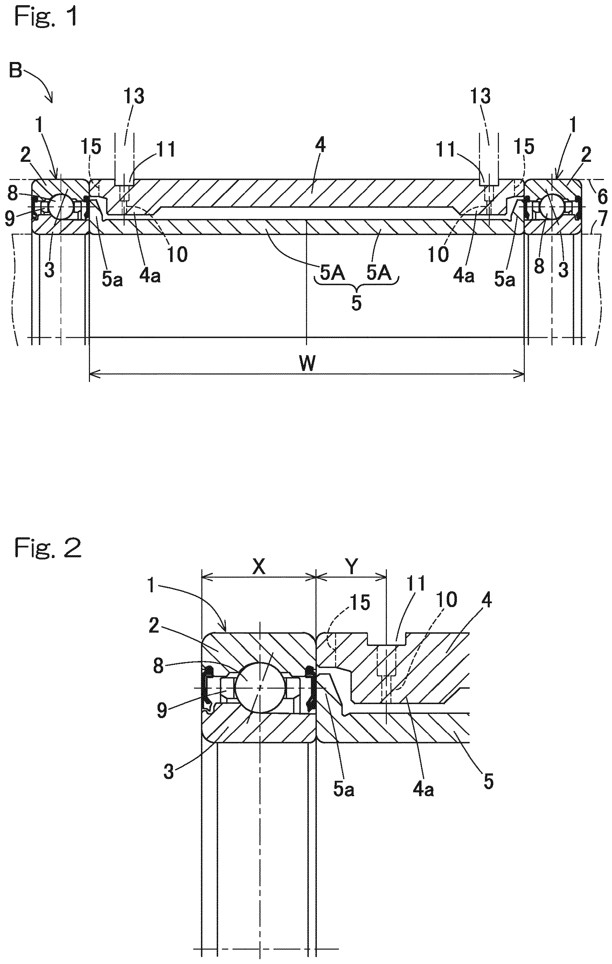

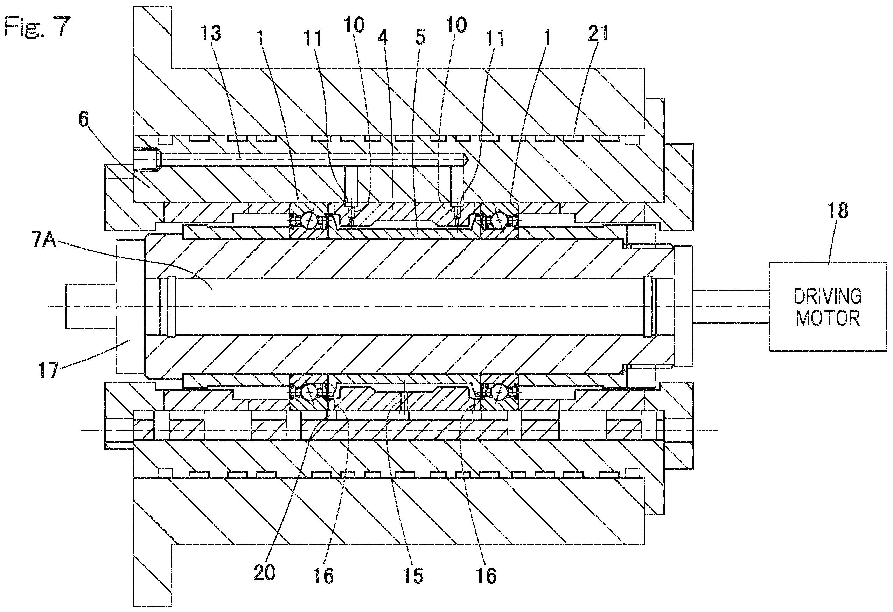

A cooling structure of a bearing device according to a first embodiment of the present invention will be described with reference to Fig. 1 to Fig. 3. The cooling structure for the bearing device B of this example may be applied to, for instance, a spindle device of a machine tool as described later in connection with Fig. 7. However, the application of the cooling structure of the bearing device B of the present embodiment is not limited to such a spindle device of a machine tool.

As shown in Fig. 1, the bearing device B includes: a plurality of bearings 1, 1 arranged in an axial direction; an outer ring spacer 4 interposed between outer rings 2, 2 of the bearings; and an inner ring spacer 5 interposed between inner rings 3, 3 of the bearings. The outer rings 2 and the outer ring spacer 4 are disposed on an inner peripheral surface of a housing 6. The inner rings 3 and the inner ring spacer 5 are fitted to an outer peripheral surface of a rotation shaft 7. The rotation shaft 7 may be, for example, a spindle of a machine tool. Each of the bearings 1 may be a rolling bearing (in particular, an angular ball bearing). The bearings 1, 1 on opposite sides are arranged in a back-to-back arrangement. Each of the bearings 1, 1 on the opposite sides is provided with a counterbore on a side opposite to a direction of inclination of a contact angle defined between an outer diametric surface of the inner ring 2 and an inner diametric surface of the outer ring 3. A plurality of rolling elements 8 are interposed between raceway surfaces of the inner and outer rings 3, 2. The rolling elements 8 are retained by a retainer 9 at equal intervals in a circumferential direction. The retainer 9 has a ring shape and is configured to be guided by the outer ring.

The cooling structure will be described. The outer ring spacer 4 is provided with one or more (three in this example) nozzles 10 configured to discharge compressed air toward an outer peripheral surface of the inner ring spacer 5, the nozzles being circumferentially arranged near each of opposite ends of the outer ring spacer. Each nozzle 10 is shaped as a stepped round hole having a larger diameter on an inflow side and a smaller diameter on a discharge side.

The outer ring spacer 4 is provided with one or more exhaust paths 15 configured to exhaust the air from a space between the outer ring spacer 4 and the inner ring spacer 5 to an outside, the exhaust paths being circumferentially arranged closer to the respective bearings with respect to the nozzles 10 on the opposite sides. Each exhaust path 15 is constituted as a through-hole extending in a radial direction, which is defined by a groove formed on an end face of the outer ring spacer 4 so as to extend in the radial direction and a side surface of the outer ring 2 of one bearing 1.

The outer ring spacer 4 is formed with annular protruding parts 4a at axial positions where the nozzles 10 are provided on the inner peripheral surface thereof, so as to approach the outer peripheral surface of the inner ring spacer 5. The inner ring spacer 5 includes annular obstruction walls 5a at opposite ends of the outer peripheral surface thereof, each obstruction wall having a protruding end approaching the outer peripheral surface of the outer ring spacer 4. The obstruction walls 5a prevent the compressed air, which has been discharged from the nozzles 10 into the space between the outer ring spacer 4 and the inner ring spacer 5, from flowing toward the rolling bearings 1 and guide it such that the compressed air flows toward the exhaust paths 15.

It should be noted that the inner ring spacer 5 is divided into two inner ring spacer divided bodies 5A, 5A arranged in the axial direction in order to prevent incapability of assembling the inner ring spacer 5 and the outer ring spacer 4 due to interference between the obstruction walls 5a on the opposite ends of the inner ring spacer 5 and the protruding parts 4a on the opposite ends of the outer ring spacer 4. Although the inner ring spacer is divided at its axial center, it may be divided at a position shifted to either side. In the present specification, a width W of the inner ring spacer 5 refers to a total width of both inner ring spacer divided bodies 5A, 5A.

The axial positions of the nozzles 10 are restricted in the following manner. That is, a distance Y (Fig. 2) from the center of each nozzle 10 to a side surface of one bearing is equal to or smaller than a bearing width X and equal to or larger than half of the bearing width X. This relation can be expressed by the following formula.

$$(1/2)X \geq Y \geq X$$

Note that the restriction of the distance Y is applied in the case where the width W of the outer ring spacer 4 and of the inner ring spacer 5 is equal to or larger than 2.5 times of the bearing width X.

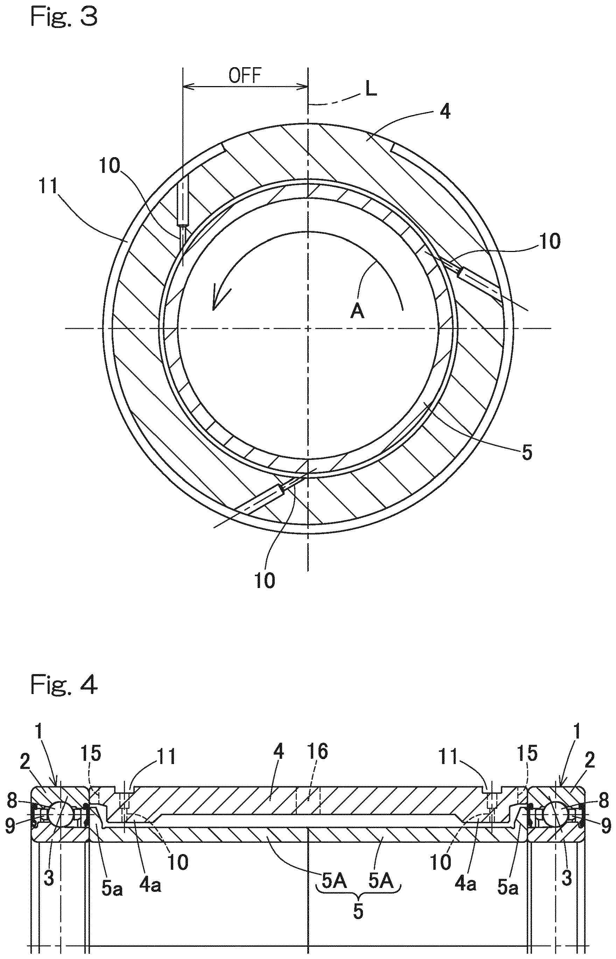

As shown in Fig. 3, the plurality of nozzles 10 are arranged at equal intervals in the circumferential direction. Each nozzle 10 has an air discharge direction inclined frontward in a rotation direction A of the spindle 7. Each nozzle 10 has a linear shape and is located at a position that is offset by an offset amount OFF from an arbitrary line L extending in the radial direction in a cross-section perpendicular to an axis of the outer ring spacer 4, to a direction perpendicular to the line L. The purpose of offsetting the nozzles 10 is to supply the discharged air as a swirling flow in the rotation direction of the spindle 7 so as to improve the cooling effect. The offset amount OFF of each nozzle 10 falls within a range equal to or greater than 0.8D/2 and equal to or less than D/2 of an outer diametric dimension (D) of the inner ring spacer 5. This range is based on a result of a test and provides the highest cooling effect.

The outer ring spacer 4 is provided with introduction grooves 11 for introducing the compressed air as cooling air on the outer peripheral surface thereof. The housing 6 is provided with cooling air supply holes 13 (Fig. 1) such that the cooling air supply holes are communicated with the introduction grooves 11, and the cooling air supply holes 13 are connected to a compressed air supply source (not illustrated) such as a blower outside the housing 6.

Effects and advantages will be described.

The compressed air is discharged from the nozzles 10 in the outer ring spacer 4 toward the outer peripheral surface of the inner ring spacer 5, so that the bearings 1 can be indirectly cooled using the inner ring spacer 5 and the outer ring spacer 4. The nozzles 10 for the compressed air in the outer ring spacer 4 are inclined frontward in the rotation direction A, so that the compressed air for cooling is blown onto the outer peripheral surface of the inner ring spacer 5 from the cooling air supply holes 13 in the housing 6 through the nozzles 10.

Thus, the compressed air forms a swirling flow in an annular gap part between the outer peripheral surface of the inner ring spacer 5 and the inner peripheral surface of the outer ring spacer 4 to cool the inner ring spacer 5. As a result, the inner rings 3 of the bearings 1, which are in contact with and fixed to end faces of the inner ring spacer 5, are cooled by heat conduction.

In this case, where the nozzles 10 are disposed distant from the bearings 1, the cooling effect is deteriorated. In contrast, where the nozzles are disposed too close to the bearings 1, the compressed air would not swirl in the rotation direction of the inner ring and be quickly diffused in an axial direction. For this reason, the compressed air cannot stay on the surface of the inner ring spacer 5 for long, so that the cooling effect is deteriorated. In the case of grease lubrication, grease filled inside the bearings 1 is discharged to an outside of the bearings, resulting in deterioration of lubrication reliability. For this reason, the distance Y from the center of each nozzle 10 to the side surface of the corresponding bearing 1 is equal to or smaller than a bearing width X and equal to or larger than half of the bearing width X. As long as the distance falls within this range, the effect of cooling the bearing 1 can be ensured even where the spacers 4, 5 each have a large width W because a distance between the bearing 1 and a position where the inner ring spacer 5 is cooled by the compressed air discharged from the nozzles 10 is not too large and because the compressed air is not diffused without swirling as it is in the case where the nozzles being located too close. Where a spacer width W is small, the above problem that the cooling effect is deteriorated because the nozzles are located too distant does not arise. Where a spacer width is large (e.g., equal to or larger than 2.5 times of the bearing width), the restriction of the distance Y from the center of each nozzle 10 to the bearing side surface provides the above effect.

Fig. 4 shows another embodiment of the present invention. This embodiment corresponds to the first embodiment described with reference to Fig. 1 to Fig. 3, in which the outer ring spacer 4 is provided with an exhaust path 16 on a side opposite to the bearing sides with respect to the nozzles 10 (hereinafter, referred to as "non-bearing side"), besides the exhaust paths 15 provided on the respective bearing sides with respect to the nozzles 10. The exhaust path 16 on the non-bearing side is a through-hole penetrating the inner and outer peripheral surfaces of the outer ring spacer 4. There may be one or more exhaust paths 16 on the non-bearing side, which are circumferentially located at the axial center of the outer ring spacer 4. In this example, the exhaust path 16 on the non-bearing side extends in the radial direction of the outer ring spacer 4. A difference between a volume of each exhaust path 15 on the bearing sides and a volume of the exhaust path 16 on the non-bearing side falls within 10% of the volume of each exhaust path 15 on the bearing sides. In the present embodiment, the rest of the constitution is the same as that of the first embodiment.

The exhaust path 16 on the non-bearing side is provided for the following reason. Where the nozzles 10 for discharging the compressed air are provided near each bearing, the compressed air flowing toward each bearing side is discharged through the exhaust paths 15 between the outer ring spacer 4 and the bearing 1 and through an inside of the bearing 1. On the other hand, the compressed air flowing toward the non-bearing side, if there is no opening for air exhaustion, tends to be retained in the space between the inner ring spacer 5 and the outer ring spacer 4 after taking heat from the inner ring spacer 5, resulting in deterioration of the cooling effect. The exhaust path 16 on the non-bearing side allows the air to be discharged outside after taking heat from the inner ring spacer 5 as described above, so that the cooling effect can be improved.

In the case where the exhaust path 16 is provided on the non-bearing side, the difference between a volume of each exhaust path 15 on the bearing sides and a volume of the exhaust path 16 on the non-bearing side preferably falls within 10% of the volume of each exhaust path 15 on the bearing sides. Where the exhaust path 16 on the non-bearing side has a volume equivalent to that of each exhaust path 15 on the bearing sides, it is possible to prevent the compressed air from unevenly flowing toward one of the bearing sides and the non-bearing side.

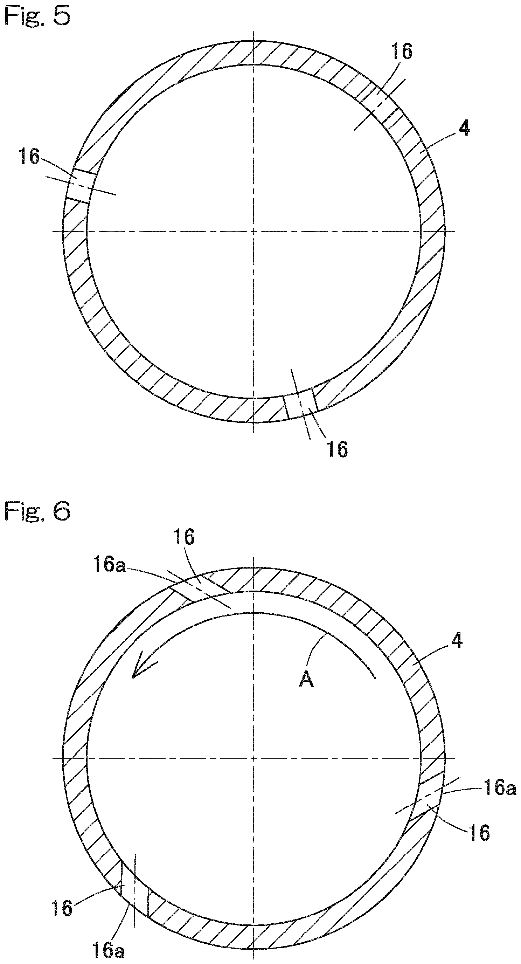

The exhaust path 16 on the non-bearing side of the outer ring spacer 4 may be inclined such that its exhaust opening 16a is directed frontward in the rotation direction A of the inner ring spacer 5, as shown in Fig. 6. Although the exhaust path 16 may be provided in the radial direction as in Fig. 5, exhaust performance is further improved where the exhaust path is inclined frontward in the rotation direction A of the inner ring spacer 5.

Fig. 7 shows an example of a spindle device of a machine tool. The spindle device of the machine tool employs the cooling structure of the bearing device according to the embodiment described with reference to Fig. 1 or Fig. 4.

The spindle 7A, which corresponds to the rotation shaft 7 in Fig. 1, is rotatably supported by the housing 6 through a pair of bearings 1, 1 on a front side and a rear side. The spindle 7A has a tip end provided with a chuck 17 for holding a tool or a workpiece and a rear end connected to a driving motor 18. Although the driving motor 18 is disposed outside the housing 6 in this example, it may be provided as a built-in motor in the housing 6. The above features, for example, the outer ring spacer 4 and the inner ring spacer 5 in the example of Fig. 4, are provided between the bearings 1, 1. The housing 6 is provided with a cooling air supply hole 13 communicated with the respective nozzles 10 of the outer ring spacer 4 through the introduction grooves 11 and a housing internal exhaust path 20 communicated with the respective exhaust paths 15, 16. The housing 6 is also provided with a cooling fluid flow path 21 for circulating cooling fluid.

According to the spindle device of the machine tool having this constitution, the cooling structure of the bearing device is applied to provide the cooling effect, making it possible to achieve higher rotation speed of the spindle 7A and higher precision of processing.

Although, in the above embodiments, description is made with reference to the case where the nozzles 10 are provided in the outer ring spacer 4 between the two rows of bearings 1, there may be three or four rows of the bearings 1 or one row of the bearing. In addition, the outer ring spacer 4 in which the nozzles 10 are provided may not be disposed between the bearings. Further, lubrication may be performed by oil (air oil, oil mist) or grease, and such a lubrication method imposes no limitation.

Although the present invention has been described in connection with the embodiments thereof, the embodiments disclosed herein are merely examples in all respects, and are not to be taken as limiting the scope of the present invention in any way whatsoever. The scope of the present invention is to be determined by the appended claims, not by the description.

Next, the following describes a cooling structure of a bearing device according to application aspects not included in the claimed invention. The application aspects include aspects 1 to 6 below.

Aspect 1 A cooling structure of a bearing device including:

a rolling bearing;
an outer ring spacer adjacent to an outer ring of the rolling bearing; and
an inner ring spacer adjacent to an inner ring of the rolling bearing, wherein
the outer ring spacer is provided with an air-cooling nozzle configured to discharge compressed air toward an outer peripheral surface of the inner ring spacer,
the inner ring spacer has a higher thermal conductivity and a higher linear expansion coefficient in an axial direction than those of the outer ring spacer, and
the rolling bearing is configured to be operated under a fixed-position preload.

Aspect 2 The cooling structure of the bearing device according to aspect 1, wherein the inner ring spacer includes an inner ring spacer body and a cover member covering at least an end face of the inner ring spacer body, which is in contact with the inner ring of the rolling bearing, and the cover member is made of a material having higher machinability than that of the inner ring spacer body.

Aspect 3 The cooling structure of the bearing device according to aspect 1, wherein the inner ring spacer includes an inner ring spacer body and end members jointed to opposite axial end faces of the inner ring spacer body, and the end members are made of a material having higher machinability than that of the inner ring spacer body.

Aspect 4 The cooling structure of the bearing device according to aspect 2 or 3, wherein the material having higher machinability than that of the inner ring spacer body is a same material as that of the outer ring spacer.

Aspect 5 The cooling structure of the bearing device according to any one of aspects 1 to 4, including two or more rows of rolling bearings arranged in the axial direction, wherein the outer ring spacer is interposed between outer rings of the adjacent rolling bearings, and the inner ring spacer is interposed between inner rings of the adjacent rolling bearings.

Aspect 6 The cooling structure of the bearing device according to aspect 5, wherein the adjacent rolling bearings are angular ball bearings and are arranged in a back-to-back arrangement.

Hereinafter, construction examples of the above application aspects will be described.

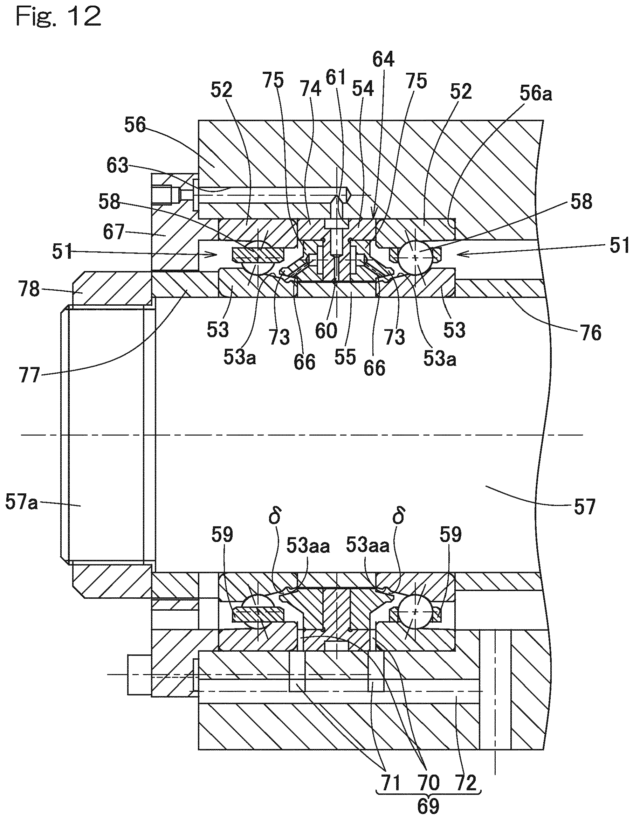

A cooling structure of a bearing device according to a first construction example of the application aspects will be described with reference to Fig. 10 to Fig. 12. The cooling structure of the bearing device of this example may be applied to a spindle device of a machine tool or other various devices. As shown in Fig. 10, the bearing device includes: a plurality of rolling bearings 51, 51 arranged in an axial direction; an outer ring spacer 54 interposed between outer rings 52, 52 of the rolling bearings; and an inner ring spacer 55 interposed between inner rings 53, 53 of the rolling bearings. The outer ring spacer 54 and the inner ring spacer 55 constitute a spacer apparatus 64. The outer rings 52 and the outer ring spacer 54 are disposed in the housing 56 as shown in Fig. 12, and the inner rings 53 and the inner ring spacer 55 are fitted to a rotation shaft 57. Fig. 12 is a sectional view of a part (for example, on a front part) of a spindle device of a machine tool including the cooling structure of the bearing device. The rotation shaft 57 is a spindle of the spindle device.

The rolling bearings 51, 51 are angular ball bearings and are arranged in a back-to-back arrangement. Each rolling bearing has a counterbore on a side opposite to a direction of inclination of a contact angle defined between an outer diametric surface of the inner ring and an inner diametric surface of the outer ring. The counterbore of the inner ring 53 is formed as an inclined surface 53a inclined such that a diameter of the inner ring increases from a side of an end face of the inner ring to a side of a raceway surface. A plurality of rolling elements 58 are interposed between raceway surfaces of the outer rings 53, 52. The rolling elements 58 are retained by a retainer 59 at equal intervals in a circumferential direction. The retainer 59 has a ring shape and is configured to be guided by the outer ring.

A preloading structure for the rolling bearings 51, 51 will be described. Of the two rows of rolling bearings 51, 51, the outer ring 52 of the rolling bearing 1 which is located on an inner side of the housing 56 (on the right ride in the figure) has a side surface engaged with a stepped part 56a on an inner peripheral surface of the housing 56. The outer ring 52 of the rolling bearing 51 which is located on a side of an end face of the housing 56 (on the left ride in the figure) is engaged with a side surface of a ring-shaped lid member 67 fixed to the end face of the housing 56 by a bolt or the like.

Of the two rows of rolling bearings 51, 51, the inner ring 53 of the rolling bearing 51 which is located on a center side of the rotation shaft 57 (on the right ride in the figure) is engaged with an end face of an inner sleeve 76 fitted to an outer periphery of the corresponding outer ring 52 so as to be fixed in position. The inner ring 53 of the rolling bearing 51 which is located on the side of the end face of the housing 56 (on the left ride in the figure) is engaged with an end face of an end side sleeve 77 disposed on an outer periphery of the end face of the housing 56. The rotation shaft 57 has an end portion having an outer peripheral surface formed as a male thread portion 57a, and the end side sleeve 77 is pressed against an axially inner side by a nut member 78 screwed onto the male thread portion 57a.

Thus, the two rows of rolling bearings 51, 51 are arranged with the outer ring spacer 54 and the inner ring spacer 55 interposed therebetween, and the outer rings 52, 2 and the inner rings 53, 3 of the two rows of rolling bearings 51, 51 are positionally fixed to the housing 56 and the rotation shaft 57, respectively, so that a fixed-position preload is applied to the rolling bearings 51, 51.

The cooling structure will be described. The outer ring spacer 54 is constituted by an outer ring spacer body 74 at the center and a pair of lubrication nozzle constituting members 75, 75. The outer ring spacer body 74 has a substantially T-shaped cross section. The pair of lubrication nozzle constituting members 75, 75 are fitted to opposite side portions of the outer ring spacer body 74 on an inner diametric side of the outer ring spacer body and are jointed together so as to constitute the outer ring spacer 54 having a laterally symmetrical shape. The outer ring spacer body 74 and the lubrication nozzle constituting members 75, 75 each have a ring shape.

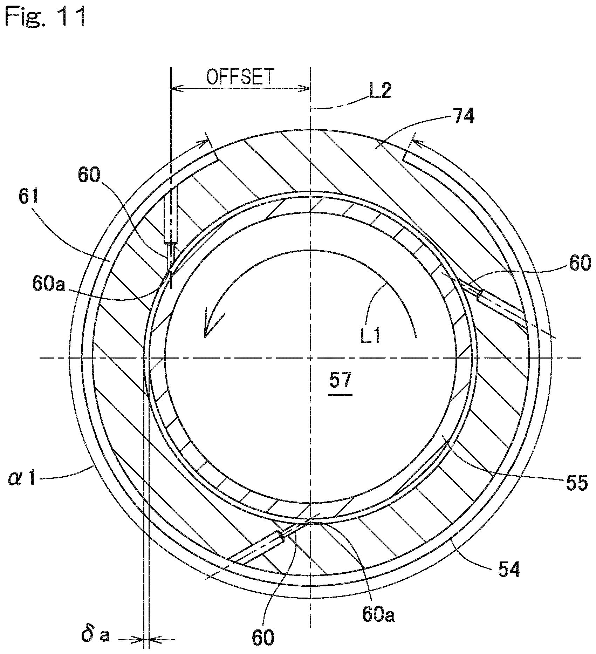

The outer ring spacer body 74 is provided with one or more (three in this example) air-cooling nozzles 60 configured to discharge compressed air toward an outer peripheral surface of the inner ring spacer 55, which faces the outer ring spacer body across a gap $\delta a$. The air-cooling nozzles 60 have an air injection direction inclined frontward in a rotation direction L1 of the spindle 57, as shown in Fig. 11. The plurality of air-cooling nozzles 60 are arranged at equal intervals in the circumferential direction. Each of the air-cooling nozzles 60 has a linear shape. Each of the air-cooling nozzles 60 is located at a position that is offset from an arbitrary line L2 extending in a radial direction in a cross-section perpendicular to an axis of the outer ring spacer 54, to a direction perpendicular to the line L2 so as to have the inclination. The purpose of offsetting each air-cooling nozzle 60 is to supply the discharged air as a swirling flow in the rotation direction L 1 of the spindle 57.

In Fig. 12, the outer ring spacer body 74 is provided with an introduction groove 61 for introducing the compressed air as cooling air on the outer peripheral surface thereof. The introduction groove 61 is provided at an axial center part of the outer peripheral surface of the outer ring spacer 54 and is formed in a circular arc shape communicated with the respective air-cooling nozzles 60, as shown in Fig. 11. The introduction groove 61 is provided over an angular range $\alpha1$ (see Fig. 11) which covers a major part of the outer peripheral surface of the outer ring spacer body 74 in the circumferential direction, except for circumferential positions where an air oil supply hole(s) (not illustrated) is/are provided. The introduction path of the compressed air is an independent passage from that of air oil for bearing lubrication. Thus, as shown in Fig. 12, the housing 56 is provided with a cooling air supply hole 63, and the introduction groove 61 is formed so as to be communicated with the cooling air supply hole 63. A non-illustrated supply device for supplying the compressed air to the cooling air supply hole 63 is connected to an outside of the housing 56 through piping.

The cooling effect will be described. The compressed air is blown onto an outer periphery of the inner ring spacer 55 from the air-cooling nozzles 60 in the outer ring spacer 54. Thus, the inner ring spacer 55 is cooled, and the inner rings 53 of the rolling bearings 51 are cooled by heat conduction. The air-cooling nozzles 60 are inclined frontward in the rotation direction L1 as described above, so that the discharged air forms a swirling flow in the rotation direction L1 of the spindle 57, providing the improved cooling effect.

A lubrication structure will be described. The outer ring spacer 54 includes lubrication nozzles 66 configured to supply air oil to insides of the respective rolling bearings 51. Each of the lubrication nozzle constituting members 75, 75 on opposite sides of the outer ring spacer 54 has an annular flange part 73 protruding inside one rolling bearing 51 so as to face the inclined surface 53a of the inner ring 53 across a gap $\delta$. The flange part 73 is formed with one or more lubrication nozzles 66 at one or more circumferential positions. The inclined surface 53a of each inner ring 53 is provided with an annular groove 53aa, and the lubrication nozzle(s) 66 is/are arranged so as to discharge the air oil toward the annular groove 53aa.

Each lubrication nozzle 66 has an inlet part communicated with an air oil supply hole (not illustrated) provided to the housing 56, and air oil is supplied from a non-illustrated air oil supply device connected to the air oil supply hole.

An exhaust structure will be described. The bearing device is provided with an air oil exhaust path 69 for discharging air oil for lubrication. The air oil exhaust path 69 is constituted by an exhaust groove 70 provided on a part of the outer ring spacer body 74 of the outer ring spacer 54 in the circumferential direction, a housing internal exhaust groove 71 provided to the housing 56 and communicated with the exhaust groove 70, and a housing internal exhaust hole 72 extending in the axial direction inside the housing 56.

A material and processing accuracy of the spacer apparatus 64 will be described. The spacer apparatus 64 is characterized in that the inner ring spacer 55 has a higher thermal conductivity and a higher linear expansion coefficient in axial direction than those of the outer ring spacer 54.

The material of the outer ring spacer 54 may preferably be carbon steel for the following reasons.

- Carbon steel has excellent machinability and thus is preferable in processing a complicated shape of the air-cooling nozzles 60 and the like.
- Carbon steel is advantageous in terms of costs and availability.

The material of the inner ring spacer 55 may preferably be copper or aluminum for the following reasons.

- It is necessary to use a material having a higher thermal conductivity in order to enhance the cooling effect by the compressed air.
- It is necessary that the material of the inner ring spacer 55 has a higher linear expansion coefficient than that of the outer ring spacer 54 in order to suppress a preload to the rolling bearings 51 by using a thermal expansion difference between the inner ring spacer 55 and the outer ring spacer 54.
- Copper and aluminum are advantageous in terms of costs and availability.

As for the processing accuracy of the inner ring spacer 55, the end faces of the inner ring spacer are preferably processed so as to have highly precise squareness and surface roughness as described below in order to enhance cooling efficiency. This makes it possible to put the end faces of the inner ring spacer 55 in close contact with the end faces of the inner rings 53 of the rolling bearings 51, so that thermal conduction can be improved to enhance the cooling effect.

For the above reason, the inner ring spacer 55 may suitably have a thermal conductivity of 100 W/m ▪ k or higher, a squareness equal to or less than 5 $\mu$m at each end face of the inner ring spacer 55 with respect to the inner peripheral surface of the inner ring spacer 55, a surface roughness Ra equal to or less than 1.0 $\mu$m, and a linear expansion coefficient equal to or greater than $15 \times 10^{-6}$. In order to smoothly expand the inner ring spacer 55 with respect to the rolling bearings 51 which are under a preload, Young's modulus of the inner ring spacer 55 is also an important factor and is preferably 60 GPa or higher.

Effects and advantages will be described. The air-cooling nozzles 60 provided in the outer ring spacer 54 discharges the compressed air toward the outer peripheral surface of the inner ring spacer 55, so that the inner ring spacer 55 is cooled, and the rolling bearings 51 are cooled by thermal conduction from the inner ring spacer 55 to the inner rings 53 of the rolling bearings 51. Therefore, the cooling effect can be improved by use of a material having high thermal conductivity to form the inner ring spacer 55. In particular, the bearings 1 can be cooled by a small amount of compressed air in a low-speed range and an intermediate-speed range. Moreover, since the bearings are operated under a fixed-position preload, and the material of the inner ring spacer 55 has a higher linear expansion coefficient than that of the material of the outer ring spacer 54, the inner ring spacer 55 is more easily thermally expanded, so that it is possible to suppress the preload to the rolling bearings 51 and contact surface pressure on the raceway surfaces of the rolling bearings 51 during rotation and thereby to suppress a temperature rise in the rolling bearings. The preload and/or contact surface pressure on the raceway surfaces due to the linear expansion difference can be more effectively suppressed in a high-speed range. In particular, this provides a greater effect where the rolling bearings 51, 51 are arranged in a back-to-back arrangement.

Axial extension of each spacer 54, 55 due to influence of heat can be determined by the following formula:

$$\Delta L = a \times L \times (T2 - T1)$$

in which

$\Delta L$: axial extension of a spacer due to influence of heat
a: linear expansion coefficient
L: spacer width dimension
T 1: initial temperature, T2: temperature after change.

As can be seen in the formula, the extension is also affected by a temperature difference (T2 - T1) and a spacer width dimension L, besides the linear expansion coefficient a. Under the condition where a temperature difference is likely to occur in a high-speed region or in the case where the spacer width dimension L is large, a larger expansion difference can be produced between the inner ring spacer 55 and the outer ring spacer 54 by use of a material having a high linear expansion coefficient to form the inner ring spacer 55.

The end faces of the inner ring spacer 55 preferably have highly precise squareness and surface roughness in order to improve the cooling effect as described above. However, copper and aluminum, which are preferable materials for the inner ring spacer 55 because they have high thermal conductivity and high linear expansion coefficient, have poor processability because they are soft metals. Also, a large number of process is required to highly precisely process copper or aluminum. For this reason, the inner ring spacer 55 may be made mainly of copper or aluminum and partly of carbon steel at portions where precision is required. This improves processability. In this case, however, it is preferable that 80% or more of a cross section of the inner ring spacer 55 is constituted by a soft metal such as copper and aluminum so as not to deteriorate the effect of copper or aluminum.

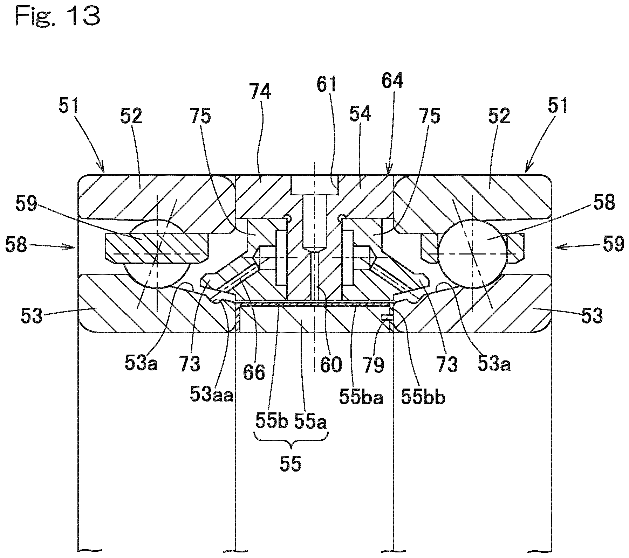

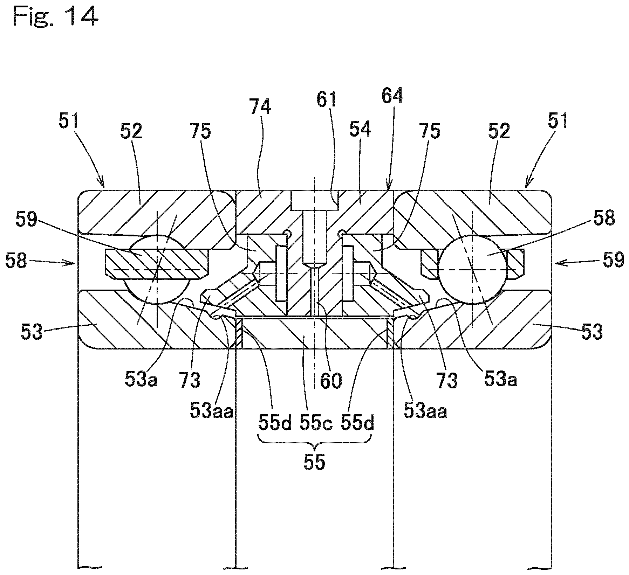

The following examples of Fig. 13 and Fig. 14 may be used to provide the construction in which the inner ring spacer 55 is mainly made of copper or aluminum and partly of carbon steel at portions where precision is required. These embodiments have the same features as those of the first construction example, unless otherwise specifically described.

In the construction example of Fig. 13, the inner ring spacer 55 includes an inner ring spacer body 55a and a cover member 55b covering at least end faces of the inner ring spacer body 55a which are in contact with the inner rings 53 of the rolling bearings 51, and the cover member 55b is made of a material having higher machinability than that of the inner ring spacer body 55a. The inner ring spacer body 55a is made of copper or aluminum, and the cover member 55b is made of a material having higher processability such as carbon steel. The cover member 55b may be, for example, a same material as that of the outer ring spacer 54.

The cover member 55b includes: an annular cover member body 55ba having fitting grooves 55baa extending in the axial direction and formed at a plurality of circumferential positions on an inner peripheral surface of the cover member body; and an annular lid member 55bb, and respective divided bodies of the inner ring spacer body 55a which is divided in the circumferential direction are fitted into the corresponding fitting grooves 55baa of the cover member body 55ba. This fitting prevents the respective divided bodies of the inner ring spacer body 55a from moving in the circumferential direction. The lid member 55bb is placed over an end face of the cover member body 55ba on a side of openings of the fitting grooves and is fixed by a pin 79 which is press-fitted into a pin hole penetrating the lid member 55bb and the inner ring spacer body 55a. In this way, the inner ring spacer 55 can be constituted by the inner ring spacer body 55a and the cover member 55b, so that the inner ring spacer is made mainly of copper or aluminum and partly of carbon steel at portions where precision is required.

In the construction example of Fig. 14, the inner ring spacer 55 includes: an annular inner ring spacer body 55c; and annular end members 55d, 55d jointed to opposite axial end faces of the inner ring spacer body 55c. The inner ring spacer body 55c is made of copper or aluminum or the like, and the end members 55d, 55d are made of a material having higher machinability (e.g., carbon steel) than that of the inner ring spacer body 55c. The inner ring spacer body 55c and the end members 55d, 55d are jointed, for example, by bonding with an adhesive or the like, fixing by a fixture such as a pin, or pressure welding. Also in this way, the inner ring spacer 55 can be constituted by the inner ring spacer body 55c and the end members 55d, 55d, so that the inner ring spacer is made mainly of copper or aluminum and partly of carbon steel at portions where precision is required.

[Reference Numerals]

1    Bearing
2    Outer ring
3    Inner ring
4    Outer ring spacer
5    Inner ring spacer
6    Housing
7    Rotation shaft
10   Nozzle
15   Exhaust path on the bearing side
16   Exhaust path on the side opposite to the bearing side
B    Bearing device

**Claims**

1.  A cooling structure of a bearing device (B) comprising:

    a bearing (1);
    an outer ring spacer (4) adjacent to an outer ring (2) of the bearing (1); and
    an inner ring spacer (5) adjacent to an inner ring (3) of the bearing (1), wherein
    the outer ring spacer (4) is provided with a nozzle (10) configured to discharge compressed air toward an outer peripheral surface of the inner ring spacer (5), **characterised in that**
    the nozzle (10) is inclined frontward in a rotation direction (L1) of the inner ring spacer (5) and is located at a position that is offset from an arbitrary line (L2) extending in a radial direction in a cross-section perpendicular to an axis of the outer ring spacer (54), in a direction perpendicular to the line (L2),
    each of the outer ring spacer (4) and the inner ring spacer (5) has a width (W) equal to or larger than 2.5 times of a bearing width (X), and
    a distance from a center of the nozzle (10) to a side surface of the bearing (1) is equal to or smaller than the bearing width (X) and equal to or larger than half of the bearing width (X).

2.  The cooling structure of the bearing device (B) as claimed in claim 1, wherein the outer ring spacer (4) is provided with an exhaust path (15, 16) configured to exhaust air from a space between the outer ring spacer (4) and the inner ring spacer (5) to an outside on each of a bearing side of the outer ring spacer (4) and a side opposite to the bearing side with respect to the nozzle (10).

3.  The cooling structure of the bearing device (B) as claimed in claim 2, wherein the exhaust path on the side opposite to the bearing side (16) is inclined such that an exhaust opening (16a) is directed frontward in the rotation direction (L1) of the inner ring spacer (5).

4.  The cooling structure of the bearing device (B) as claimed in claim 2 or 3, wherein a difference between a volume of the exhaust path on the bearing side (15) and a volume of the exhaust path on the side opposite to the bearing side (16) falls within 10% of the volume of the exhaust path on the bearing side (15).

5.  The cooling structure of the bearing device (B) as claimed in any one of claims 1 to 4, wherein the outer ring spacer (4) and the inner ring spacer (5) are interposed between two adjacent bearings (1), and nozzles (10) are disposed on opposite sides of the outer ring spacer (4) with respect to a center position of a spacer width of the outer ring spacer (4).

6.  A spindle device of a machine tool, comprising, the cooling structure of the bearing device (B) as claimed in any one of claims 1 to 5.

**Patentansprüche**

1.  Kühlstruktur einer Lagervorrichtung (B), aufweisend:

    ein Lager (1);
    ein Außenring-Beabstandungselement (4), das an einen Außenring (2) des Lagers (1) angrenzt; und
    ein Innenring-Beabstandungselement (5), das an einen Innenring (3) des Lagers (1) angrenzt, wobei
    das Außenring-Beabstandungselement (4) mit einer Düse (10) versehen ist, die eingerichtet ist, Druckluft in Richtung einer äußeren Umfangsfläche des Innenring-Beabstandungselements (5) auszuleiten,
    **dadurch gekennzeichnet, dass**
    die Düse (10) in einer Drehrichtung (L1) des Innenring-Beabstandungselements (5) nach vorne geneigt ist und sich an einer Position befindet, die in Bezug auf eine willkürliche Linie (L2) versetzt ist, welche sich in einer radialen Richtung in einem Querschnitt senkrecht zu einer Achse des Außenring-Beabstandungselements (54) in einer Richtung senkrecht zu der Linie (L2) erstreckt,

das Außenring-Beabstandungselement (4) und das Innenring-Beabstandungselement (5) jeweils eine Breite (W) aufweist, die größer als oder gleich dem 2,5-fachen einer Lagerbreite (X) ist, und

ein Abstand von einer Mitte der Düse (10) zu einer Seitenfläche des Lagers (1) kleiner oder gleich der Lagerbreite (X) ist und größer oder gleich der Hälfte der Lagerbreite (X) ist.

2. Kühlstruktur der Lagervorrichtung (B) gemäß Anspruch 1, wobei das Außenring-Beabstandungselement (4) mit einem Auslasspfad (15, 16) versehen ist, welcher eingerichtet ist, Luft aus einem Raum zwischen dem Außenring-Beabstandungselement (4) und dem Innenring-Beabstandungselement (5) zu einer Außenseite auf jeweils einer Lagerseite des Außenring-Beabstandungselements (4) und einer Seite gegenüber der Lagerseite in Bezug auf die Düse (10) auszuleiten.

3. Kühlstruktur der Lagervorrichtung (B) gemäß Anspruch 2, wobei der Auslasspfad auf der Seite gegenüber der Lagerseite (16) derart geneigt ist, dass eine Auslassöffnung (16a) in der Drehrichtung (L1) des Innenring-Beabstandungselements (5) nach vorne gerichtet ist.

4. Kühlstruktur der Lagervorrichtung (B) gemäß Anspruch 2 oder 3, wobei ein Unterschied zwischen einem Volumen des Auslasspfads auf der Lagerseite (15) und einem Volumen des Auslasspfads auf der Seite gegenüber der Lagerseite (16) innerhalb von 10 % des Volumens des Auslasspfads auf der Lagerseite (15) liegt.

5. Kühlstruktur der Lagervorrichtung (B) gemäß einem der Ansprüche 1 bis 4, wobei das Außenring-Beabstandungselement (4) und das Innenring-Beabstandungselement (5) zwischen zwei benachbarten Lagern (1) angeordnet sind, und Düsen (10) auf gegenüberliegenden Seiten des Außenring-Beabstandungselements (4) in Bezug auf eine Mittelposition einer Beabstandungselement-Breite des Außenring-Beabstandungselements (4) angeordnet sind.

6. Spindelvorrichtung einer Werkzeugmaschine, aufweisend:
die Kühlstruktur der Lagervorrichtung (B) gemäß einem der Ansprüche 1 bis 5.

## Revendications

1. Structure de refroidissement d'un dispositif de palier (B), comprenant :

un palier (1) ;
un écarteur de bague externe (4) adjacent à une bague externe (2) du palier (1) ; et
un écarteur de bague interne (5) adjacent à une bague interne (3) du palier (1), dans laquelle l'écarteur de bague externe (4) est fourni avec une buse (10) configurée pour décharger de l'air comprimé vers une surface périphérique externe de l'écarteur de bague interne (5),
**caractérisée en ce que**
la buse (10) est inclinée vers l'avant dans une direction de rotation (L1) de l'écarteur de bague interne (5) et est située sur une position qui est décalée par rapport à une ligne arbitraire (L2) s'étendant dans une direction radiale dans une section transversale de manière perpendiculaire à un axe de l'écarteur de bague externe (54) dans une direction de manière perpendiculaire à la ligne (L2),
chacun de l'écarteur de bague externe (4) et de l'écarteur de bague interne (5) présente une largeur (W) supérieure ou égale à 2,5 fois une largeur de palier (X), et
une distance depuis un centre de la buse (10) à une surface latérale du palier (1) est inférieure ou égale à la largeur de palier (X) et est supérieure ou égale à la moitié de la largeur de palier (X).

2. Structure de refroidissement du dispositif de palier (B) selon la revendication 1, dans laquelle l'écarteur de bague externe (4) est fourni avec une voie d'échappement (15, 16) configurée pour évacuer de l'air depuis un espace entre l'écarteur de bague externe (4) et l'écarteur de bague interne (5) vers un extérieur sur chacun parmi un côté de palier de l'écarteur de bague externe (4) et un côté opposé au côté de palier par rapport à la buse (10).

3. Structure de refroidissement du dispositif de palier (B) selon la revendication 2, dans laquelle la voie d'échappement sur le côté opposé au côté de palier (16) est inclinée de telle sorte qu'une ouverture d'échappement (16a) est dirigée vers l'avant dans la direction de rotation (L1) de l'écarteur de bague interne (5).

4. Structure de refroidissement du dispositif de palier (B) selon la revendication 2 ou 3, dans laquelle une différence entre un volume de la voie d'échappement sur le côté de palier (15) et un volume de la voie d'échappement sur le côté opposé au côté de palier (16) se situe dans les 10 % du volume de la voie d'échappement sur le côté de palier (15).

5. Structure de refroidissement du dispositif de palier (B) selon l'une quelconque des revendications 1 à 4, dans laquelle l'écarteur de bague externe (4) et l'écarteur de bague interne (5) sont interposés entre deux paliers (1) adjacents, et les buses (10) sont disposées sur des côtés opposés de l'écarteur de bague externe (4) par rapport à une position centrale d'une largeur d'écarteur de l'écarteur de bague externe (4).

6. Dispositif à broche d'une machine-outil, comprenant :
la structure de refroidissement du dispositif de palier (B) selon l'une quelconque des revendications 1 à 5.

Fig. 1

Fig. 2

Fig. 3

Fig. 4

Fig. 5

Fig. 6

Fig. 7

DRIVING
MOTOR

18

21
1
11
11
10
5
4
10
11
1
13
6
7A
17
16
15
16
20

Fig. 8

Fig. 9

Fig. 10

EP 3 851 692 B1

Fig. 11

Fig. 12

Fig. 13

Fig. 14

**EP 3 851 692 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2018171129 A
- JP 2019020645 A
- JP 6144024 B
- WO 0163132 A2
- JP 2015117820 A